# EUROPÄISCHE PATENTSCHRIFT

(11) **EP 2 456 994 B1**
(45) Veröffentlichungstag und Bekanntmachung des Hinweises auf die Patenterteilung: **19.06.2013**
(21) Anmeldenummer: 10742409.5
(22) Anmeldetag: 29.06.2010
(51) Int. Cl.: F16D 69/04, F16D 13/64

(54) **VERFAHREN ZUR HERSTELLUNG EINES REIBBELAGS UND REIBBELAG**
METHOD FOR PRODUCING A FRICTION LINING AND FRICTION LINING
PROCÉDÉ DE RÉALISATION D'UNE GARNITURE DE FRICTION, ET GARNITURE DE FRICTION CORRESPONDANTE

(30) Priorität: 23.07.2009 DE 102009034395
(43) Veröffentlichungstag der Anmeldung: 30.05.2012
(73) Patentinhaber: Schaeffler Technologies AG & Co. KG, 91074 Herzogenaurach (DE)
(72) Erfinder: RUNGE, Oliver, 51570 Alt-Windeck (DE); SPANDERN, Christian, 57578 Elkenroth (DE); WEYEL, Thorsten, 56459 Willmenrod (DE)
(86) Internationale Anmeldenummer: PCT/DE2010/000744
(87) Internationale Veröffentlichungsnummer: WO 2011/009427

(56) Entgegenhaltungen:
- WO-A2-2009/147332
- DE-A1- 4 431 642
- DE-A1- 19 626 688

## Beschreibung

Die Erfindung betrifft ein Verfahren mit den Merkmalen gemäß dem Oberbegriff des Anspruch 1 sowie einem Reibbelag mit den Merkmalen gemäß dem Oberbegriff des Anspruchs 11.

Derartige Reibbeläge sind bekannt und weisen ein Trägerblech auf, auf dem Belagmaterial aufgepresst ist. Eine besonders gute Haftung des Belagmaterials wird dabei erzielt, wenn gemäß der DE 10 2005 003 507 A1 die Kontaktfläche des Trägerblechs zum Belagmaterial vorbehandelt, beispielsweise gestrahlt oder beschichtet wird. Auf diese Weise kann ein Vernieten des Belagmaterials mit dem Trägerblech vermieden werden, wodurch sehr dünne, hochtemperaturstabile Reibbeläge insbesondere für den Einsatz für Doppelkupplungen in Doppelkupplungsgetrieben in überschneidendem Reibbetrieb darstellbar sind Dabei werden die Reibbeläge mittels der Trägerbleche mit Belagfedersegmenten einer Kupplungsscheibe vernietet. Hierzu sind aus dem Belagmaterial Nietöffnungen freigestellt, die Nietböden um Nietöffnungen der Trägerbleche freilegen. An den Nietböden werden Nietköpfe angelegt und mit den Belagfedersegmenten vernietet. Dabei bereitet die vollständige Freihaltung, wie sie beispielsweise in der DE 44 31 642 A1 sowie der gattungsbilden den DE 196 26 688 A1 dargestellt ist, der Nietböden von Belagmaterial Schwierigkeiten, so dass einerseits die Nieten nicht vollständig auf dem Metall aufsitzen, so dass diese sich lockern können und/oder die Verschleißreserve der Reibbeläge durch eine verminderte effektive Belagstärke in unzulänglicher Weise vermindert wird und andererseits bei gründlicher Entfernung der Belagreste von den Nietböden unter Umständen das Trägerblech angegriffen und geschwächt wird.

Aufgabe der Erfindung ist daher, ein Verfahren vorzuschlagen, mit dem die Herstellung von Reibbelägen mit auf Trägerblechen gepresstem Belagmaterial reproduzierbar und mit gleicher effektiver Verschleißreserve bei gleichbleibender Belastbarkeit der Trägerbleche nach der Vernietung mit der Kupplungsscheibe erzielt wird.

Die Aufgabe wird durch ein Verfahren mit den Merkmalen gemäß Anspruch 1 sowie einem Reibbelag mit den Merkmalen gemäß Anspruch 11 gelöst.

Es ist also ein Verfahren zur Herstellung eines Reibbelags für eine Reibungskupplung mit einem auf einem Trägerblech verpressten Belagmaterial und im Trägerblech in einer Vielzahl über den Umfang verteilter Nietöffnungen mit diese umgebenden Nietböden vorgesehen, wobei die Nietöffnungen und Nietböden während des Pressens des Reibbelags von Belagmaterial überdeckt und anschließend rückstandsfrei und ohne Materialabtrag des Trägerblechs vom Belagmaterial freigestellt werden. Durch die rückstandsfreie, verschleißfreie Freistellung der Nietböden wird eine reproduzierbare Anlagefläche für die Nietköpfe der Niete zur Vernietung des Trägerblechs mit den Belagfedersegmenten geschaffen, so dass deren Auftrag in die Verschleißreserve des Belagmaterials hinein in einem engen Toleranzbereich vorgegeben werden kann und die Verschleißgrenze daher in einem engen Bereich ausgelegt und entsprechend dünne, in der Reibungskupplung axialen Bauraum sparende Reibbeläge ausgeführt werden können. Weiterhin neigen die Nieten durch die rein metallische Auflage nicht zu einem Lockern.

Es hat sich erwiesen, ein nicht metallabrasives Verfahren wie beispielsweise Bohren zu verwenden, um bei vollständiger Freistellung der Nietböden das Trägerblech zu schonen. Hierzu wird in erfinderischer Weise ein steuerbarer wie auslenkbarer, vorzugsweise numerisch positionierbarer Laser verwendet, der das Belagmaterial im Bereich der Nietböden verdampft, wobei die sich entwickelnde Wärme so ausgelegt wird, dass sich das Trägermaterial allenfalls geringfügig erwärmt und nicht einmal anläuft, so dass dessen Materialgefüge nicht negativ beeinflusst wird. Vielmehr hat sich gezeigt, dass das lichtabsorptive Belagmaterial sehr schnell verdampft wird, während der Laserstrahl von dem reflektierenden Trägerblech in hohem Maße reflektiert wird.

Zur Erhöhung der Taktfrequenz der Freistellung der Nietböden kann ein großer Anteil des Belagmaterials im Bereich der Nietböden bereits vorgebohrt werden, so dass lediglich das in unmittelbarer Nähe der Nietböden verbleibende, nicht ohne das Risiko des Abtrags von Trägerblechmaterial mittels Bohrens abtragbare Belagmaterial durch das erfinderische Laserbehandeln entfernt werden muss.

Es hat sich weiterhin als vorteilhaft erwiesen, wenn bei der erfinderischen Laserabtragung von Belagmaterial die Haftung des Belag-materials auf dem Trägerblech im Bereich der Nietböden vermindert wird. Dies kann in vorteilhafter Weise erfolgen, indem im Bereich der Nietböden eine Zwischenschicht auf das Trägerblech aufgebracht wird. Auf diese Weise wird im Bereich der Nietböden das Trägerblech vor der haftungsverbessernden Vorbehandlung wie beispielsweise Strahlen geschützt, so dass eine geringere Haftung des Belagmaterials resultiert und daher die nachträgliche Freistellung nach dem Pressvorgang erleichtert ist. Dabei kann die Zwischenschicht eine Adhäsionsfolie sein, die um die Nietlöcher mit den Nietböden geklebt wird. Alternativ kann die Zwischenschicht aus einem Trennmittel gebildet sein, das die Haftung von Belagmaterial auch auf bereits zur besseren Haftung erfolgter Strahlung des Trägerblechs vermindern kann. Die Zwischenschicht insbesondere in Form der Adhäsionsfolie kann nach einer Aktivierung der Oberfläche des Trägerblechs und vor dem Aufbringen von Belagmaterial entfernt werden. Alternativ kann die Zwischenschicht während der Freistellung der Nietböden vom Belagmaterial entfernt werden und kann dabei die Oberfläche des Trägerblechs zusätzlich vor einem Eingriff des Freistellungswerkzeugs schützen.

Alternativ zur Verwendung einer Zwischenschicht können die Nietböden durch das Trägerblech kontaktierende Stifte während des Aufbringens von Belagmaterial abgedeckt werden. Dadurch wird eine dicke Beschichtung der Nietböden mit Belagmaterial vermieden Feine, die Stifte während des Pressvorgangs unterwandernde Belagmaterialreste werden erfindungsgemäß mittels einer Laserbehandlung vollständig entfernt werden. Es hat sich als besonders vorteilhaft erwiesen, wenn das Trägerblech während des Pressvorgangs des Belagmaterials durch die Stifte gleichzeitig positioniert und gehalten ist, so dass keine zusätzlichen Produktionsmittel und Hilfsstoffe eingesetzt werden müssen.

Die Aufgabe wird im Weiteren durch einen Reibbelag für eine Reibungskupplung mit einem auf einem Trägerblech verpressten Reibbelag und im Trägerblech in einer Vielzahl über den Umfang verteilter Nietöffnungen gelöst, die vom Belagmaterial nach dem zuvor beschriebenen Verfahren vollständig und ohne Abtrag von Material des Trägerblechs freigestellt sind.

Die Erfindung wird anhand des in den Figuren 1 bis 3 dargestellten Ausführungsbeispiels näher erläutert. Dabei zeigen:
- Figur 1: eine Schrägansicht eines erfindungsgemäßen Reibbelags,
- Figur 2: eine Teilansicht des Reibbelags der Figur 1
und
- Figur 3: einen Teilschnitt durch den Reibbelag der Figuren 1 und 2.

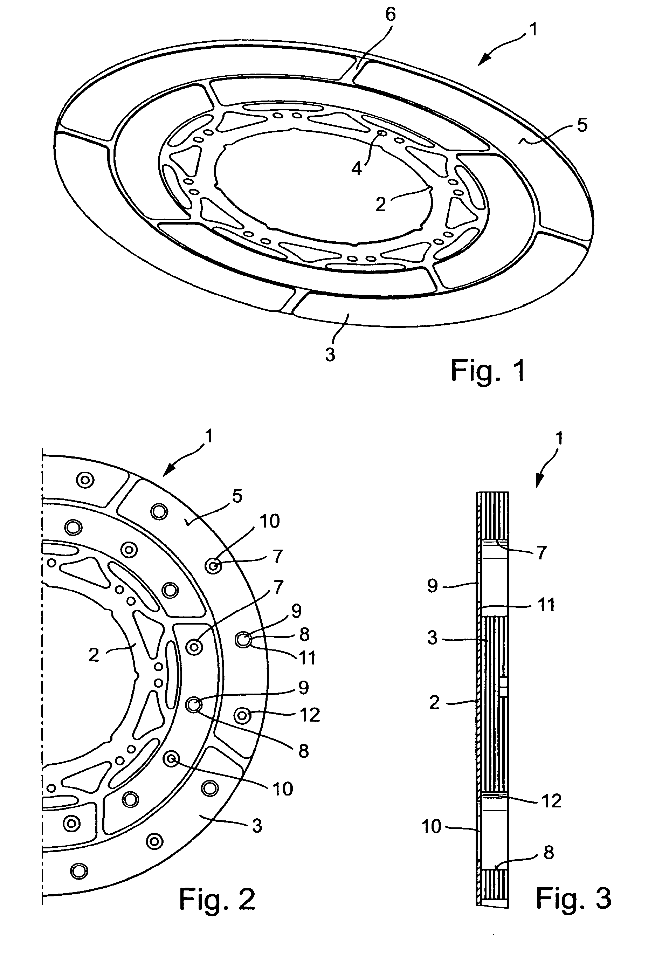

Figur 1 zeigt eine Schrägansicht des Reibbelags 1 mit dem Trägerblech 2 und dem Belagmaterial 3. Das Trägerblech 2 ist aus Blech gestanzt und geformt und weist radial innerhalb des Belagmaterials 3 über den Umfang verteilt Nietöffnungen 4 auf, an denen jeweils zwei gegeneinander mit den Reibflächen 5 des Belagmaterials 3 nach außen gewandt angeordnete Reibbeläge 1 mit einer nicht dargestellten Kupplungsscheibe verbunden wie vernietet werden.

Das Belagmaterial wird vorzugsweise als Pulvermischung aus Harz wie beispielsweise Phenolharzen, Resol und dergleichen, Fasermaterial wie Glas- und/oder Kunststofffasern wie Aramidfasern und Füllstoffen wie Schwerspat und anderen organischen oder anorganischen Materialien sowie gegebenenfalls weiteren Hilfsstoffen wie Ruß, Graphit, Polyacrylnitril und dergleichen konfektioniert und auf das Trägerblech 2 aufgebracht und mit diesem vorzugsweise unter erhöhter Temperatur, beispielsweise bei 250°C verpresst. Unmittelbar danach kann eine Pyrolisierung des Belagmaterials 3 unter Sauerstoffausschluss erfolgen, um eine höhere Temperaturfestigkeit des Reibbelags 1 zu erzielen. Mit dem Pressvorgang werden bereits Profilierungen 6 an der Reibfläche 5 des Reibbelags 1 vorgesehen. Die Reibfläche 5 wird bevorzugt vor dem Gebrauch bearbeitet wie aufgeraut, um das Einlaufverhalten zu verbessern.

Figur 2 zeigt den Reibbelag 1 in Teilansicht. Deutlich werden hierbei die Freistellungen 7, 8 der zweireihig auf unterschiedlichem Durchmesser über den Umfang verteilten Nietöffnungen 9, 10. Die bezüglich ihres Durchmessers zu den Nietöffnungen 9 unterschiedlichen Nietöffnungen 10 wechseln sich gegenseitig über den Umfang ab. Dabei dienen die Nietöffnungen 9, 10 jeweils der gegenseitigen Vernietung zweier mit den Reibflächen 5 abgewandter Reibbeläge 1 gegeneinander unter Zwischenlegung von Belagfedersegmenten, wobei die Nieten jeweils abwechselnd von beiden Seiten eingebracht und vernietet werden, wobei für die Setz - und Schließköpfe der Niete jeweils unterschiedliche Öffnungen 9, 10 verwendet werden und sich daraus unterschiedliche Flächen für die Nietböden 11, 12 ergeben.

Bezüglich der Herstellung des Reibbelags 1 hat es sich als vorteilhaft erwiesen, die Nietöffnungen 9, 10 primär mit Belagmaterial 3 zu überdecken und nach dem Press- und Pyrolisiervorgang die Freistellungen 7, 8 zu schaffen. Hierbei werden auch die Nietböden 11, 12 rückstandsfrei und ohne das Material des Trägerblechs 2 insbesondere im Bereich der Nietböden zu schwächen. Dies erfolgt durch Freisetzen der Freistellungen 7, 8 mit einem steuerbaren Laser, indem die Rückstände verbrannt werden. Dabei kann zur Erhöhung der Taktfrequenz in der Fertigung bis auf eine sichere Resttiefe der Freistellungen 7, 8, bei der das Trägerblech 2 noch nicht zerspant wird, vorgebohrt werden. Zusätzlich oder alternativ kann die Haftung im Bereich der Freistellungen 7, 8 beispielsweise durch eine Zwischenschicht vermindert werden.

Alternativ zu der nachträglichen Einbringung der Freistellungen 7, 8 nach dem Verpressen des Belagmaterials 3 können die Freistellungen 7, 8 bereits während des Pressens freigehalten werden, indem Halte- beziehungsweise Positionierstifte zur Fixierung des Trägerblechs 2 direkt auf den Nietöffnungen 9, 10 und den diese umgebenden Nietböden 11, 12 positioniert und gegen eine feste Unterlage gepresst werden. Gegebenenfalls dazwischen tretendes Belagmaterial in feiner Schicht wird danach zur vollständigen und rückstandsfreien Freimachung der Nietböden mittels eines Lasers in einfacher Weise entfernt.

Figur 3 zeigt den Reibbelag 1 im Teilschnitt durch zwei in dem Trägerblech 2 vorgesehene Nietöffnungen 9, 10. Die Freistellungen 7, 8 im auf dem Trägerblech 2 verpressten Belagmaterial 3 geben die die Nietöffnungen 9, 10 umgebenden Nietböden 11, 12 vollständig und rückstandslos frei, ohne das Material der Nietböden 11, 12 zu schwächen, so dass die Nietköpfe wie Setz- und Schließköpfe jeweils abwechselnd und plan auf den Nietböden 11, 12 mit großer Reproduzierbarkeit aufgesetzt werden können. Auf diese Weise resultiert eine einheitliche Höhe dieser und eine definierte Verschleißreserve, die aufgebraucht ist, wenn der erste Nietkopf in Kontakt mit der Gegenreibscheibe der Reibungskupplung in Kontakt tritt. Auf diese Weise können sehr reproduzierbare und dünne Reibbeläge 1 mit geringen Toleranzen hergestellt werden.

**Bezugszeichenliste**

| | |
|---|---|
| 1 | Reibbelag |
| 2 | Trägerblech |
| 3 | Belagmaterial |
| 4 | Nietöffnung |
| 5 | Reibfläche |
| 6 | Profilierung |
| 7 | Freistellung |
| 8 | Freistellung |
| 9 | Nietöffnung |
| 10 | Nietöffnung |
| 11 | Nietboden |
| 12 | Nietboden |

## Patentansprüche

1. Verfahren zur Herstellung eines Reibbelags (1) für eine Reibungskupplung mit einem auf einem Trägerblech (2) verpressten Belagmaterial (3) und im Trägerblech (2) in einer Vielzahl über den Umfang verteilten Nietöffnungen (9, 10) mit diese umgebenden Nietböden (11, 12), wobei die Nietöffnungen (9, 10) und Nietböden (11, 12) während des Pressens des Reibbelags (1) von Belagmaterial (3) überdeckt und anschließend rückstandsfrei und ohne Materialabtrag des Trägerblechs (2) vom Belagmaterial (3) freigestellt werden, **dadurch gekennzeichnet, dass** das Belagmaterial (3) im Bereich der Nietböden (11, 12) mittels eines Lasers verdampft wird.

2. Verfahren nach einem der Ansprüche 1, **dadurch gekennzeichnet, dass** das Belagmaterial (3) im Bereich der Nietböden (11, 12) vorgebohrt wird.

3. Verfahren nach einem der Ansprüche 1 bis 2, **dadurch gekennzeichnet, dass** die Haftung des Belagmaterials (3) auf dem Trägerblech (2) im Bereich der Nietböden (11, 12) vermindert wird.

4. Verfahren nach Anspruch 3, **dadurch gekennzeichnet, dass** im Bereich der Nietböden (11, 12) eine Zwischenschicht auf das Trägerblech (2) aufgebracht wird.

5. Verfahren nach Anspruch 4, **dadurch gekennzeichnet, dass** die Zwischenschicht eine Adhäsionsfolie ist.

6. Verfahren nach Anspruch 4, **dadurch gekennzeichnet, dass** die Zwischenschicht ein Trennmittel ist.

7. Verfahren nach einem der Ansprüche 4 bis 6, **dadurch gekennzeichnet, dass** die Zwischenschicht nach einer Aktivierung der Oberfläche des Trägerblechs (2) und vor dem Aufbringen von Belagmaterial (3) entfernt wird.

8. Verfahren nach einem der Ansprüche 4 bis 6, **dadurch gekennzeichnet, dass** die Zwischenschicht während der Freistellung der Nietböden (11, 12) vom Belagmaterial (3) entfernt wird.

9. Verfahren nach einem der Ansprüche 1 bis 3, **dadurch gekennzeichnet, dass** die Nietböden (11, 12) durch das Trägerblech (2) kontaktierende Stifte während des Aufbringens und Pressens des Belagmaterials (3) abgedeckt werden.

10. Verfahren nach Anspruch 9, **dadurch gekennzeichnet, dass** das Trägerblech (2) während des Pressvorgangs des Belagmaterials (3) durch die Stifte positioniert und gehalten ist.

11. Reibbelag (1) für eine Reibungskupplung mit auf einem Trägerblech (2) verpresstem Belagmaterial (3) und im Trägerblech (2) in einer Vielzahl über den Umfang verteilten Nietöffnungen (9, 10), die vom Belagmaterial (3) vollständig nach dem Verfahren gemäß einem der Ansprüche 1 bis 10 freigestellt sind.

## Claims

1. Method for producing a friction lining (1) for a friction clutch having a lining material (3) which is pressed on a support plate (2) and, in the support plate (2), rivet openings (9, 10) which are distributed in a multiplicity over the circumference with rivet bodies (11, 12) which surround them, the rivet openings (9, 10) and rivet bodies (11, 12) being covered by lining material (3) during the pressing of the friction lining (1) and subsequently being released from the lining material (3) without residue and without the removal of material from the support plate (2), **characterized in that** the lining material (3) is evaporated in the region of the rivet bodies (11, 12) by means of a laser.

2. Method according to Claim 1, **characterized in that** the lining material (3) is predrilled in the region of the rivet bodies (11, 12).

3. Method according to either of Claims 1 and 2, **characterized in that** the adhesion of the lining material (3) on the support plate (2) is reduced in the region of the rivet bodies (11, 12).

4. Method according to Claim 3, **characterized in that** an intermediate layer is applied to the support plate (2) in the region of the rivet bodies (11, 12).

5. Method according to Claim 4, **characterized in that** the intermediate layer is an adhesion film.

6. Method according to Claim 4, **characterized in that** the intermediate layer is a separating means.

7. Method according to one of Claims 4 to 6, **characterized in that** the intermediate layer is removed after an activation of the surface of the support plate (2) and before the application of lining material (3).

8. Method according to one of Claims 4 to 6, **characterized in that** the intermediate layer is removed during the release of the rivet bodies (11, 12) from the lining material (3).

9. Method according to one of Claims 1 to 3, **characterized in that** the rivet bodies (11, 12) are covered during the application and pressing of the lining material (3) by pins which make contact with the support plate (2).

10. Method according to Claim 9, **characterized in that** the support plate (2) is positioned and held by the pins during the pressing operation of the lining material (3).

11. Friction lining (1) for a friction clutch having lining material (3) which is pressed on a support plate (2) and, in the support plate (2) rivet openings (9, 10) which are distributed in a multiplicity over the circumference and are released completely from the lining material (3) in accordance with the method according to one of Claims 1 to 10.

## Revendications

1. Procédé de réalisation d'une garniture de friction (1) pour un embrayage à friction comprenant un matériau de garniture (3) pressé sur une tôle porteuse (2) et, dans la tôle porteuse (2), des fonds de rivetage (11, 12) entourant une pluralité d'ouvertures de rivetage (9, 10) réparties sur la périphérie, les ouvertures de rivetage (9, 10) et les fonds de rivetage (11, 12) étant recouverts pendant le pressage de la garniture de friction (1) par un matériau de garniture (3) et étant ensuite débarrassés du matériau de garniture (3) sans résidu et sans enlèvement de matière de la tôle porteuse (2), **caractérisé en ce que** le matériau de garniture (3) est vaporisé par laser dans la région des fonds de rivetage (11, 12).

2. Procédé selon la revendication 1, **caractérisé en ce que** le matériau de garniture (3) est pré-percé dans la région des fonds de rivetage (11, 12).

3. Procédé selon l'une quelconque des revendications 1 à 2, **caractérisé en ce que** l'adhérence du matériau de garniture (3) sur la tôle porteuse (2) est réduite dans la région des fonds de rivetage (11, 12).

4. Procédé selon la revendication 3, **caractérisé en ce que** dans la région des fonds de rivetage (11, 12) une couche intermédiaire est appliquée sur la tôle porteuse (2).

5. Procédé selon la revendication 4, **caractérisé en ce que** la couche intermédiaire est une feuille d'adhésion.

6. Procédé selon la revendication 4, **caractérisé en ce que** la couche intermédiaire est un nageant séparateur.

7. Procédé selon l'une quelconque des revendications 4 à 6, **caractérisé en ce que** la couche intermédiaire est enlevée après activation de la surface de la tôle porteuse (2) et avant l'application du matériau de garniture (3).

8. Procédé selon l'une quelconque des revendications 4 à 6, **caractérisé en ce que** la couche intermédiaire est enlevée pendant que les fonds de rivetage (11, 12) sont débarrassés du matériau de garniture (3).

9. Procédé selon l'une quelconque des revendications 1 à 3, **caractérisé en ce que** les fonds de rivetage (11, 12) sont recouverts par des goupilles venant en prise avec la tôle porteuse (2) pendant l'application et le pressage du matériau de garniture (3).

10. Procédé selon la revendication 9, **caractérisé en ce que** la tôle porteuse (2), pendant l'opération de pressage du matériau de garniture (3), est positionnée et maintenue par les goupilles.

11. Garniture de friction (1) pour un embrayage à friction avec un matériau de garniture (3) pressé sur une tôle porteuse (2) et avec une pluralité d'ouvertures de rivetage (9, 10) réparties sur la périphérie dans la tôle porteuse (2), lesquelles sont totalement débarrassées du matériau de garniture (3) après le procédé selon l'une quelconque des revendications 1 à 10.
